# EUROPÄISCHE PATENTSCHRIFT

(11) **EP 1 113 853 B1**
(45) Veröffentlichungstag und Bekanntmachung des Hinweises auf die Patenterteilung: **14.12.2005**
(21) Anmeldenummer: 99941576.3
(22) Anmeldetag: 10.08.1999
(51) Int. Cl.: B01D 29/21, B01D 35/147

(54) **FLÜSSIGKEITSFILTER, INSBESONDERE FÜR ÖL ODER KRAFTSTOFF EINER BRENNKRAFTMASCHINE**
FILTER FOR LIQUIDS, MAINLY OIL OR FUEL, IN AN INTERNAL COMBUSTION ENGINE
FILTRE A LIQUIDE, NOTAMMENT POUR HUILE OU CARBURANT D'UN MOTEUR A COMBUSTION INTERNE

(30) Priorität: 11.08.1998 DE 19836311
(43) Veröffentlichungstag der Anmeldung: 11.07.2001
(73) Patentinhaber: Mann + Hummel GmbH, 71638 Ludwigsburg (DE)
(72) Erfinder: JAINEK, Herbert, D-74074 Heilbronn (DE)
(74) Vertreter: Voth, Gerhard
(86) Internationale Anmeldenummer: PCT/EP1999/005845
(87) Internationale Veröffentlichungsnummer: WO 2000/009238

(56) Entgegenhaltungen:
- EP-A- 0 723 796
- EP-A- 0 848 978
- DE-A- 19 644 647
- DE-U- 29 613 703

## Beschreibung

Die Erfindung betrifft ein Flüssigkeitsfilter, insbesondere für Öl oder Kraftstoff einer Brennkraftmaschine nach dem Oberbegriff des Anspruchs 1. Solche Filter sind bekannt und werden seit vielen Jahren insbesondere an den Brennkraftmaschinen von Fahrzeugen eingesetzt. Beispielsweise ist in der DE 40 36 191 A1 ein Filter beschrieben, bei welchem bei einem Filtereinsatzwechsel zunächst das komplette Filter von der zugehörigen Brennkraftmaschine abgeschraubt wird, anschließend kann das Filtergehäuse geöffnet und die verbrauchte Filterpatrone entnommen und durch eine frische Filterpatrone ersetzt werden. Danach wird das Filtergehäuse wieder zusammengebaut bzw. geschlossen und dann an die Brennkraftmaschine angeschraubt.

Zur Verbindung dieses Filters mit der Brennkraftmaschine weist das Filtergehäuse eine stimseitige Kopfplatte auf, die einstückig mit einem zentralen Dom mit Innengewinde ausgeführt ist. Dieser Dom mit Innengewinde ist auf ein passendes Anschlusselement mit Außengewinde an der Brennkraftmaschine aufschraubbar, wobei zugleich die benötigten Strömungsverbindungen zwischen Brennkraftmaschine und Filter unter Abdichtung nach außen hergestellt werden. Nachteilig bei diesem bekannten Filter ist, dass für den Wechsel der Filterpatrone ein großer Demontage- und Montageaufwand erforderlich ist, was zu einem hohen Zeitaufwand und zu einem erhöhten Risiko von Montagefehlem führt.

Es ist ferner in dem G 94 11 212 ein Flüssigkeitsfilter beschrieben, welches einen abnehmbaren Deckel aufweist. An diesem Deckel ist eine Filterpatrone befestigt. Diese Filterpatrone kann entnommen, durch eine neue ersetzt werden und der Deckel auf das Gehäuse aufgeschraubt werden. Die Montage eines solchen Elements ist zwar vereinfacht, ein Nachteil bei diesem bekannten Flüssigkeitsfilter besteht jedoch darin, dass für zusätzliche Komponenten, wie beispielsweise das Umgehungsventil eine aufwendige Aufnahme erforderlich ist.

Aus der EP 0 723 796 A1 ist ein Flüssigkeitsfilter insbesondere für die Reinigung von Schmieröl für Verbrennungsmotoren bekannt. In diesem ist ein Ventil vorgesehen, welches kompakt aufgebaut ist und nach einer Vorfertigung in das Mittelrohr eingesetzt wird.

Es ist weiterhin aus der DE 296 13 703 ein Flüssigkeitsfilter insbesondere für Öl oder Kraftstoff einer Brennkraftmaschine bekannt. Bei diesem ist ein Ventil vorgesehen, wobei der Ventüteller in ein Stützrohr eingeklipst wird.

Der Erfindung liegt die Aufgabe zugrunde, die geschilderten Nachteile zu vermeiden und ein Flüssigkeitsfilter zu schaffen, bei dem auch zusätzliche Komponenten in einfacher Weise hergestellt und mit den Hauptkomponenten des Filters verbunden werden können.

Diese Aufgabe wird ausgehend von dem Oberbegriff des Anspruchs 1 durch dessen kennzeichnende Merkmale gelöst

Der wesentliche Vorteil der Erfindung ist darin zu sehen, dass für den Filtereinsatz ein einfaches Stützrohr vorgesehen ist, welches mit dem Deckel verbunden wird. In dieses Stürzrohr kann durch eine entsprechende Verbindungstechnik der Ventilkörper in einfacher Weise eingesetzt werden. Es hat sich bewährt, den Ventilkörper mit dem Stützrohr über eine Rast-, Klebe- oder Klemmverbindung zu fixieren.

Eine vorteilhafte Ausgestaltung der Erfindung sieht vor, zwischen Ventilkörper und Stützrohr zusätzlich einen O-Ring vorzusehen. Dieser O-Ring hat die Aufgabe, eventuelle Leckverluste zu vermeiden.

Es ist weiterbildungsgemäß vorteilhaft, wenigstens eine der Verbindungsflächen zwischen Stützrohr und Ventilkörper zu verzahnen. Diese Verzahnung kann derart gestaltet sein, dass ein Lösen des Ventilkörpers im Stützrohr nahezu unmöglich wird. Außerdem übemimmt die Verzahnung eine Dichtfunktion.

Das weitere Element des Ventils, nämlich der Ventilteller, stützt sich unter Zwischenschaltung einer Druckfeder in vorteilhafter Weise unmittelbar an einer Anlagefläche des Stützrohres ab.

In einer weiteren Ausgestaltung der Erfindung ist vorgesehen, am Stützrohr einen Anschlag für den Ventilkörper anzuordnen. Dieser Anschlag kann aus Stegen oder aus einem Flansch bestehen und erleichtert die manuelle oder mechanische Montage des Ventilkörpers.

Eine Weiterbildung des Flüssigkeitsfilters gemäß Anspruch 6 betrifft die Fixierung des Stützrohres im Deckel. Das Stützrohr ist hierzu mit Rastzungen versehen, die in Ausnehmungen des Deckels eingreifen und so eine nahezu unlösbare Verrastung zwischen Deckel und Stützrohr schaffen.

Diese und weitere Merkmale von bevorzugten Weiterbildungen der Erfindung gehen außer aus den Ansprüchen auch aus der Beschreibung und den Zeichnungen hervor.

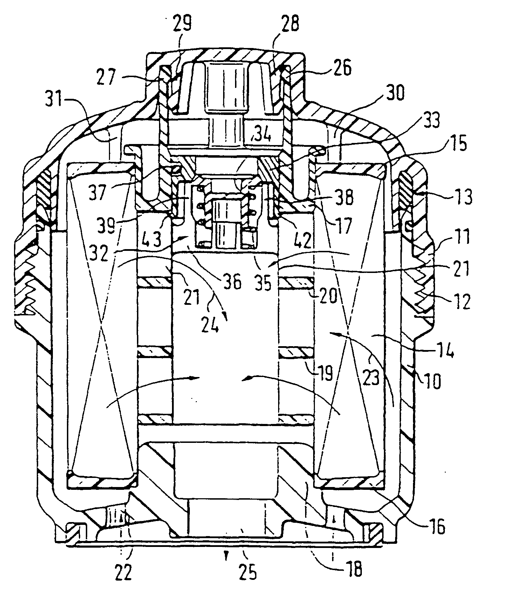

Die Erfindung wird nachfolgend anhand eines Ausführungsbeispieles näher erläutert. Die Figur zeigt:
ein Flüssigkeitsfilter in einer Schnittdarstellung.

Das Flüssigkeitsfilter gemäß der Figur besteht aus einem Gehäuse 10, welches mit einem Deckel 11 verschlossen ist. Der Deckel ist über eine Schraubverbindung 12 an dem Gehäuse befestigt. Zur Abdichtung zwischen Deckel 11 und Gehäuse 10 ist ein Dichtungssystem 13 vorgesehen. In dem Gehäuse 10 befindet sich ein Filtereinsatz 14. Dieser besteht aus einem zickzackförmig gefalteten Filterpapier, das zu einem Kreisring geformt ist und an den Stirnseiten Endscheiben 15, 16 aufweist. Die Endscheiben liegen abdichtend an dem Stützrohr 17 bzw. dem Dichtflansch 18 an. Das Stützrohr 17 weist Stützstege 19, 20 für den Filtereinsatz 14 auf. Außerdem sind Durchbrüche 21 über den Umfang des Stützrohres verteilt angeordnet, die ein Abfließen der gefilterten Flüssigkeit ermöglichen. Die ungefilterte Flüssigkeit tritt durch den Flüssigkeitszulauf 22, durchströmt gemäß Pfeil 23, 24 den Filtereinsatz 14 und verlässt - wie erwähnt - durch die Durchbrüche 21 des Stützrohres 17 und den Flüssigkeitsrücklaufkanal 25 das Flüssigkeitsfilter.

Das Stützrohr 17 weist im oberen Bereich Rastzungen 26, 27 auf. Diese wirken mit Rastzungen 28, 29 des Deckels zusammen und schaffen eine nahezu unlösbare Verbindung zwischen Deckel und Stützrohr 17. Selbstverständlich kann unter Aufbringung entsprechender Zugkräfte das Stützrohr 17 vom Deckel gelöst werden. Bei dem normalen Austausch des Filtereinsatzes 14, bei welchem der Filtereinsatz 14 von dem Stützrohr abgezogen wird, verbleibt das Stützrohr zuverlässig am Deckel 11. Am Deckel 11 sind Anschlagstege 30, 31 für den Filtereinsatz vorgesehen, die damit die axiale Lage des Filtereinsatzes definieren.

Im Stützrohr 17 ist ein Überdruckventil 32 angeordnet. Dieses Ventil hat die Aufgabe, bei zu stark verschmutztem Filtereinsatz einen Flüssigkeitskreislauf aufrechtzuerhalten. Das Überdruckventil 32 besteht aus einem Ventilkörper 33, einem Ventilteller 34, einer Druckfeder 35 sowie einem Ventiltellerträger 36. Der Ventiltellerträger 36 ist Teil des Stützrohres 17. Der Ventilkörper 33 ist, wie rechts der Mittellinie der Schnittdarstellung gezeigt, an der Außenfläche mit einer Sägezahnprofilgeometrie versehen und über einen Presssitz in das Stützrohr 17 eingeschoben. Linksseitig der Mittellinie ist eine Variante dargestellt. Hier ist zusätzlich ein O-Ring 37 vorgesehen, der eine Abdichtung zwischen Ventilkörper 33 und Stützrohr 17 vornimmt. Auch die rechtsseitig der Mittellinie gezeigte Befestigung des Ventilkörpers stellt eine zuverlässige Abdichtung dar. Die Befestigung muss lediglich gewährleisten, dass die Partikel, welche von dem Filtereinsatz 14 zurückgehalten werden, auch in diesem Bereich zurückgehalten werden, d. h. die Filterfeinheit dieser Befestigung muss der Filterfeinheit des Filtereinsatzes 14 entsprechen.

An dem Stützrohr 17 sind Anschläge 38, 39 vorgesehen. Diese begrenzen bzw. fixieren die axiale Lage des Ventilkörpers 33 und erleichtern den Einbau desselben in das Stützrohr 17. Der Ventilkörper 33 kann mit Schnappelementen 42, 48 versehen sein zur Verrastung an dem Stützrohr 17.

## Patentansprüche

1. Flüssigkeitsfilter, insbesondere für Öl oder Kraftstoff einer Brennkraftmaschine, bestehend aus einem Filtergehäuse (10) mit mindestens einem Flüssigkeitszulauf, einem Flüssigkeitsrücklaufkanal, einem das Filtergehäuse verschließenden lösbaren Deckel (11) und einem aus dem Filtergehäuse entnehmbaren, einzeln austauschbaren Filtereinsatz und einem am Deckel oder am Filtergehäuse befestigten Stützrohr (17) für den Filtereinsatz sowie einem im wesentlichen im Stützrohr angeordneten Ventil, insbesondere einem Umgehungsventil, **dadurch gekennzeichnet, dass** der Ventilkörper (33) mit dem Stützrohr (17) über eine Rast-, Klebe-, Klemmverbindung angeordnet ist und der Ventiltellerträger (36) ein Teil des Stützrohres (17) ist.

2. Flüssigkeitsfilter nach Anspruch 1, **dadurch gekennzeichnet, dass** zur Abdichtung zwischen Ventilkörper (33) und Stützrohr (17) zusätzlich ein O-Ring (37) vorgesehen ist.

3. Flüssigkeitsfilter nach Anspruch 1 oder 2, **dadurch gekennzeichnet, dass** wenigstens eine der Verbindungsflächen zwischen Stützrohr (17) und Ventilkörper (33) verzahnt ist oder eine Dichtgeometrie aufweist.

4. Flüssigkeitsfilter nach einem der vorherigen Ansprüche, **dadurch gekennzeichnet, dass** der Ventilteller (34) des Ventils (32) sich unter Zwischenschaltung einer Druckfeder (35) an dem Stützrohr (17) abstützt.

5. Flüssigkeitsfilter nach einem der vorherigen Ansprüche, **dadurch gekennzeichnet, dass** das Stützrohr (17) einen Anschlag für den Ventilkörper (33) in Form eines ringförmigen Flansches oder in Form von Stegen (38, 39) aufweist.

6. Flüssigkeitsfilter nach einem der vorherigen Ansprüche, **dadurch gekennzeichnet, dass** das Stützrohr (17) an der dem Deckel (11) zugewandten Seite Rastzungen (26, 27) aufweist und der Deckel Ausnehmungen aufweist zur Aufnahme der Rastzungen (36, 37), so dass eine unlösbare Verrastung zwischen Deckel (11) und Stützrohr (17) geschaffen ist.

7. Flüssigkeitsfilter nach Anspruch 1, **dadurch gekennzeichnet, dass** Führungsstege (42) für den Ventilteller vorgesehen sind.

## Claims

1. Liquid filter, more especially for oil or fuel of an internal combustion engine, said liquid filter comprising a filter housing (10) with at least one liquid inlet, a liquid return duct, a detachable cover (11) for closing the filter housing and a filter element, which is removable from the filter housing and is individually replaceable, and a support tube (17) for the filter insert, said support tube being secured to the cover or the filter housing, as well as a valve, more especially a by-pass valve, which is disposed substantially in the support tube, **characterised in that** the valve body (33) is disposed with the support tube (17) via a locking, adhesive or clamping connection and the valve head support (36) is a part of the support tube (17).

2. Liquid filter according to claim 1, **characterised in that** in addition an O-ring seal (37) is provided for sealing between the valve body (33) and the support tube (17).

3. Liquid filter according to claim 1 or 2, **characterised in that** at least one of the connecting faces between the support tube (17) and the valve body (33) is interlocked or includes a sealing geometry.

4. Liquid filter according to one of the preceding claims, **characterised in that** the valve body (34) of the valve (32) is supported on the support tube (17) with the insertion of a compression spring (35).

5. Liquid filter according to one of the preceding claims, **characterised in that** the support tube (17) includes a stop member for the valve body (33) in the form of an annular flange or in the form of webs (38, 39).

6. Liquid filter according to one of the preceding claims, **characterised in that** the support tube (17) includes locking tongues (26, 27) on the side facing the cover (11) and the cover includes recesses for the accommodation of the locking tongues (36, 37)), such that a non-detachable locking is created between the cover (11) and the support tube (17).

7. Liquid filter according to claim 1, **characterised in that** guide webs (42) are provided for the valve head.

## Revendications

1. Filtre à liquide, notamment pour huile ou carburant d'un moteur à combustion interne, comprenant un boîtier de filtre (10) avec au moins une admission de liquide, un canal de retour de liquide, un couvercle (11) amovible fermant le boîtier de filtre, une cartouche filtrante pouvant être retirée du boîtier de filtre et remplacée individuellement, et un tube support (17) pour la cartouche filtrante fixé au couvercle ou au boîtier de filtre, ainsi qu'une soupape, en particulier une soupape de dérivation, pour l'essentiel disposée dans le tube support,
**caractérisé en ce que**
le corps de soupape (33) est disposé avec le tube support (17) par blocage, collage ou serrage, et le support de tête de soupape (36) est solidaire du tube support (17).

2. Filtre à liquide selon la revendication 1,
**caractérisé en ce qu'**
un joint torique (37) supplémentaire est prévu pour assurer l'étanchéité entre le corps de soupape (33) et le tube support (17).

3. Filtre à liquide selon la revendication 1 ou 2,
**caractérisé en ce qu'**
au moins l'une des surfaces d'assemblage entre le tube support (17) et le corps de soupape (33) présente une denture ou une géométrie d'étanchéité.

4. Filtre à liquide selon l'une quelconque des revendications précédentes,
**caractérisé en ce que**
la tête de soupape (34) de la soupape (32) prend appui sur le tube support (17) en intercalant un ressort de pression (35).

5. Filtre à liquide selon l'une quelconque des revendications précédentes,
**caractérisé en ce que**
le tube support (17) présente une butée pour le corps de soupape (33) sous la forme d'une bride annulaire ou de nervures (38, 39).

6. Filtre à liquide selon l'une quelconque des revendications précédentes,
**caractérisé en ce que**
sur la face en regard du couvercle (11) le tube support (17) présente des languettes d'arrêt (26, 27) et le couvercle des évidements pour recevoir les languettes d'arrêt (36, 37) afin de réaliser un blocage inamovible entre le couvercle (11) et le tube support (17).

7. Filtre à liquide selon la revendication 1,
**caractérisé en ce que**
des nervures de guidage (42) pour la tête de soupape sont prévues.
